(19) Europäisches Patentamt / European Patent Office / Office européen des brevets

(11) **EP 4 686 962 A1**

(12) **EUROPEAN PATENT APPLICATION**

(43) Date of publication:
04.02.2026 Bulletin 2026/06

(21) Application number: 25154018.3

(22) Date of filing: 27.01.2025

(51) International Patent Classification (IPC):
*G02B 1/00* (2006.01)  *G02B 27/10* (2006.01)
*G02B 27/09* (2006.01)  *G02B 27/42* (2006.01)

(52) Cooperative Patent Classification (CPC):
**G02B 1/002; G02B 27/0927; G02B 27/10; G02B 27/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.07.2024 US 202463677100 P
21.11.2024 US 202418955162

(71) Applicant: II-VI Delaware, Inc.
**Wilmington, Delaware 19801 (US)**

(72) Inventors:
• **Hannigan, Justin M.
Wilmington, DE, 19801 (US)**
• **Greiner, Christoph
Wilmington, DE, 19801 (US)**
• **Iazikov, Dmitri
Wilmington, DE, 19801 (US)**

(74) Representative: **Forresters IP LLP
Skygarden
Erika-Mann-Straße 11
80636 München (DE)**

Remarks:
Amended claims in accordance with Rule 137(2)
EPC.

(54) **OPTICAL ELEMENT (OE) FOR COMBINING OUTPUTS OF MULTIPLE OPTICAL EMITTERS INTO A GLOBALLY WEIGHTED INTENSITY OUTPUT**

(57) An optical element (OE) includes a body formed whereupon, in response to input electromagnetic fields emitted by an array of optical emitters toward the body that overlap each other, at least partially, to form a combined input electromagnetic field on a first side of the body, the body generates to an output plane disposed on a second side of the body an output electromagnetic field. The output electromagnetic field remains unchanged or substantially unchanged in intensity at the output plane between a first time when all of optical emitters are emitting electromagnetic fields and a second time when a subset of the one or more of the optical emitters is not emitting electromagnetic fields. The output electromagnetic field remains substantially unchanged in intensity when one or more portions or areas of the output electromagnetic field remain illuminated at reduced intensity at the second time versus the first time.

Processed by Luminess, 75001 PARIS (FR)

## Description

## CROSS-REFERENCE TO RELATED APPLICATION

This application claims the benefit of U.S. Provisional Patent Application No. 63/677,100, filed July 30, 2024, the contents of which are incorporated herein by reference in their entirety.

## BACKGROUND

1) Field

The present disclosure relates to diffractive beam splitters and shapers designed to operate with multi-emitter/aperture (array) sources.

2) Background

Illumination technologies in mobile communications, AR/VR, general consumer electronics, and LIDAR markets have a strong need to combine the output of multiple light sources into a joint output pattern for 3D sensing etc. as increased output powers can increase sensing distance, field of view as well as accuracy. In many prior art devices (such as Apple's Face ID structured light generator) a global output light pattern is created by "tiling", which comprises repeated vertical and horizontal stitching of smaller subsection outputs ("tiles"). Each "tile" corresponds to the processed output (e. g. split) of a single optical emitter or light source, e.g. one vertical cavity surface emitting laser (VCSEL) in a VCSEL array. A lens deflects and aligns the single source output tiles into a global output pattern. This approach requires multiple optical surfaces for splitting/shaping the individual emitter outputs and the subsequent deflection/"tiling" into the combined output. Due to the spatially repetitive (quasi periodic) nature of the "tiling" approach, it is not possible to create globally optimized output functions, such as intensity profiles, weighted according to powers of inverse cosine functions or output angle specific beam shaping in case of dot or spot generation. As a result, in accordance with the prior art approach of creating a global output light pattern by "tiling", turning off one of a plurality of optical emitters or light sources creates in the global output light pattern an area or portion without light in the output light density distribution, i.e., light in said area or portion is extinguished.

## SUMMARY

The present disclosure describes optical elements (OE) in the nature of beams shapers, in particular diffractive OEs, and a method of design thereof to combine multiple light sources into a single global output pattern. The approach enables globally optimized outputs, in intensity and phase, e.g., divergence, etc., using a single, unified beam shaping body. The OE output fields for all emitters overlap substantially or are identical. Herein, the terms "optical element(s)", "OE(s)", "beam shaper(s)", and "diffractive beam shaper(s)" and the like may be used interchangeably.

The present disclosure discloses exemplary OEs that provide for a single globally optimized designed output pattern from an array of light sources, in particular edge emitting lasers, including the following features:

Collimation of each output beam;
Splitting into a rectangular grid of spots that is characterized by constant angular spacing;
Control of beam profiles at an output plane (e. g. correction for anamorphic distortion of spot shapes);
Control over pincushion/barrel distortion; and
Global angular intensity profile control.

The disclosed exemplary OEs are furthermore relatively insensitive against lateral misalignment and are able to work at distances from the array of edge emitting lasers where individual laser emitter outputs overlap. Herein, the terms "laser(s)", "optical emitter(s)", light source(s)", and the like may be used interchangeably; and the terms "electromagnetic field(s)", "light", "laser light", and the like may be used interchangeably.

More specifically, disclosed is an optical element (OE) for combining outputs of N optical emitters into a globally weighted intensity or intensity distribution output. The OE comprises a body formed whereupon, in response to the N optical emitters emitting N electromagnetic fields toward the body that overlap each other, at least partially, to form an input electromagnetic field on a first side of the body, the body generates at an output plane disposed on a second side of the body an output electromagnetic field. The body is configured to manipulate or shape the input electromagnetic field as it passes through the body whereupon the output electromagnetic field remains unchanged or substantially unchanged in intensity or intensity distribution at the output plane between a first time when the N optical emitters are emitting the N electromagnetic fields and a second time when M of the N optical emitters are emitting M electromagnetic fields, wherein M < N, N ≥ 3, and M ≥ 2.

In an example of what may comprise the output electromagnetic field remaining substantially unchanged in intensity or intensity distribution, the output electromagnetic field remains substantially unchanged in intensity or intensity distribution at the output plane when each of one or more portions or areas of the output electromagnetic field at the output plane has a reduced intensity, but is not extinguished, at the second time versus the first time and the remaining portions or areas of the output electromagnetic field have the same intensity or intensity distribution at the first and second times. In a non-limiting example, the term "not extinguished", when used in connection with each of one or more portions or areas of the output electromagnetic field at the output plane having a reduced intensity, means that each of said one or more portions of the output electromagnetic field at the second time has Y amount of radiance, greater than zero, impinging on said portion versus X amount of radiance impinging on said portion at the first time, wherein X > Y. Herein, "radiance" may be defined as radiant flux emitted, reflected, transmitted, or received by a surface, per unit solid angle per unit projected area.

Also disclosed is an optical system comprising an optical element (OE) having a first side and a second side. An array of optical emitters is disposed and operative for emitting to the first side of the OE input electromagnetic fields that overlap each other, at least partially, to form a combined input electromagnetic field at the first side of the OE. In response to the combined input electromagnetic field, the OE generates at an output plane disposed on the second side of the OE an output electromagnetic field. The output electromagnetic field remains unchanged or substantially unchanged in intensity or intensity distribution at the output plane between a first time when all of optical emitters of the array of optical emitters are emitting the input electromagnetic fields and a second time when a subset of one or more of the optical emitters of the array of optical emitters is not emitting the input electromagnetic fields.

In an example of what may comprise the output electromagnetic field remaining substantially unchanged in intensity or intensity distribution, the output electromagnetic field remains substantially unchanged in intensity or intensity distribution when each of one or more portions or areas of the output electromagnetic field remain illuminated at reduced intensity, but is not extinguished, at the second time versus the first time. In this example, the remaining portions or areas of the output electromagnetic field may have the same intensity at the first and second times.

In another example of what may comprise the output electromagnetic field remaining substantially unchanged in intensity or intensity distribution, the output electromagnetic field remains substantially unchanged in intensity or intensity distribution when N - M of the optical emitters stop emitting, whereupon a change in intensity at the one or more portions or areas of the output electromagnetic field is about (N - M)/N%, where N = the total number of optical emitters of the array of optical emitters; and M = the number of optical emitters of the array of optical emitters that emit output electromagnetic field after (N - M) of the optical emitters stop emitting output electromagnetic field(s). For example, where N = 100 and M = 98, the change in intensity or intensity distribution is (100-98)/100% ~ 2%.

In another example, the output electromagnetic field remaining substantially unchanged in intensity or intensity distribution at the output plane may occur (be averaged) on a time scale that may be multiple coherence times, e.g. 3, 10, 20, 100. For timescales short compared to the coherence time, there may also be deviations in the output electromagnetic field intensity or intensity distribution due to speckle.

## BRIEF DESCRIPTION OF THE DRAWINGS

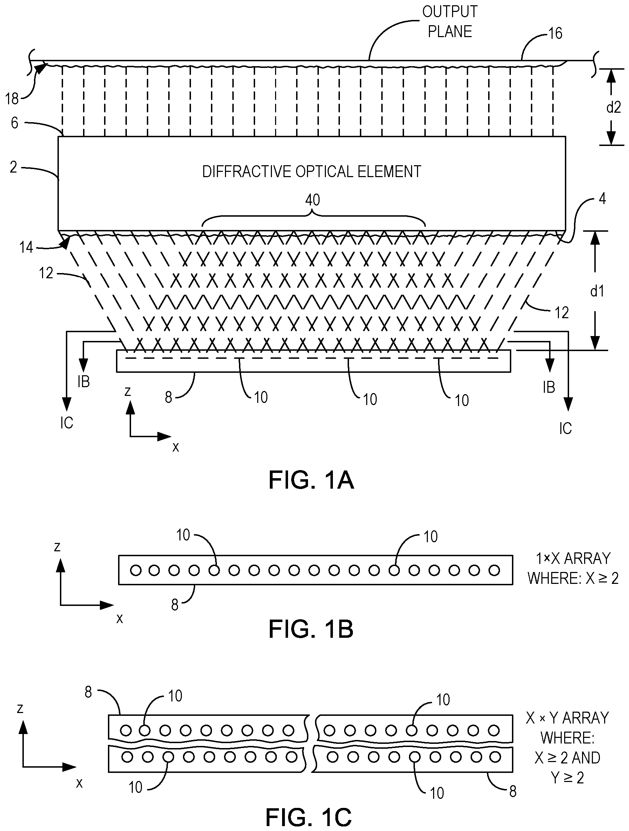

Fig. 1A is a schematic side view of an example optical system including an example array of light sources (optical emitters) each of which emits or projects an input electromagnetic field or radiation, e.g., laser light, to an optical element in accordance with the principles of the present application that is configured to manipulate or shape the input electromagnetic field as it passes through the body to form an output electromagnetic field that remains unchanged or substantially unchanged in intensity or intensity distribution at the output plane between a first time when N optical emitters are emitting N electromagnetic fields and a second time less than the N optical emitters are emitting electromagnetic fields;

Fig. 1B is a plan view of an example 1 x X array of the example array of light sources of Fig. 1A taken along lines IB-IB in Fig. 1A, wherein X $\geq$ 2;

Fig. 1C is a plan view of an example X x Y array of the example array of light sources of Fig. 1A taken along lines IC-IC in Fig. 1A, wherein X $\geq$ 2 and Y $\geq$ 2;

Fig. 2 is a perspective view of an example optical element of Fig. 1A including an array of spaced cylindrical projections or pillars of different diameters and a common height extending in a +Z direction from a base of the example optical element;

Fig. 3 is a perspective view of another example optical element of Fig. 1A including an array of spaced cylindrical projections or pillars of different diameters and different heights extending in a +Z direction from a base of the example optical element;

Fig. 4 is a plan view of the circular surfaces of the tops of the cylindrical projections shown in Fig. 2 and/or Fig. 3 that face the output plane shown in Fig. 1A;

Fig. 5 is a perspective view yet another example optical element of Fig. 1A including an array of cuboid shaped projections or pillars of different heights extending in a +Z direction from a base of the example optical element;

Figs. 6A and 6B are perspective views of portions of other example optical elements of Fig. 1A including continuously varying, undulating, or wavy surface thickness;

Fig. 7 is a perspective view yet another example optical element of Fig. 1A including different refractive indices;

Figs 8A and 8B are example target and actual intensity profiles produced on the output plane of Fig. 1A by the example amplitude and phase plots of Figs. 10A and 10B projected by the example array of light sources of Fig. 1A on the side or face of the example optical element of Fig. 1A closest to the light source of Fig. 1A;

Fig. 9A is an example cross-section of an example target intensity profile taken along line IXA - IXA in Fig. 8A;

Fig. 9B is an example cross-section of an example actual intensity profile taken along line IXB - IXB in Fig. 8B; and

Figs. 10A and 10B are example amplitude and phase plots of electromagnetic radiation emitted or projected by the example array of light sources of Fig. 1A on the side or face of the example optical element of Fig. 1A closest to example array of light sources of Fig. 1A, which example array of light sources, in an example, comprises a 1 x 20 array of light sources.

## DETAILED DESCRIPTION

Various non-limiting embodiments will now be described with reference to the accompanying figures where like reference numbers correspond to like or functionally equivalent elements or features.

As used herein, spatial, or directional terms, such as "left", "right", "inner", "outer", "above", "below", "top", "bottom", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure.

At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

As used herein, "coupled", "coupling", and similar terms refer to two or more elements that are joined, linked, fastened, connected, put in communication, or otherwise associated (e.g., mechanically, electromagnetically, fluidly, optically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of', when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

With reference to Figs. 1A-1C, an optical system in accordance with the principles of the present disclosure includes an optical element (OE) 2, e.g., a diffractive OE, having a first side 4 and a second side 6. An array 8 of optical emitters 10 is disposed a distance d1, e.g., 0.56 millimeters, from the first side 4 of the OE 2 and is operative for emitting to the first side 4 of the OE 2 a number of individual input electromagnetic fields 12 that overlap each other, at least partially (as shown by reference number 40), to form a combined input electromagnetic field 14 at the first side 4 of the OE 2.

As shown in Fig. 1B the array 8 of optical emitters 10 may be a 1 x X array of optical emitters 10, where X $\geq$ 2. Alternatively, as shown in Fig. 1C the array 8 of optical emitters 10 may be an X x Y array of optical emitters 10, where X $\geq$ 2, Y $\geq$ 2, and X and Y may be the same or different. In an example, the array 8 of optical emitters 10 may be a 1 x 20 array of single-mode optical emitters 10 distributed horizontally with a center-to-center spacing of 22 $\mu$m.

In one non-limiting example, each optical emitter 10 of the array 8 may be a semiconductor laser having the following performance characteristics: a center wavelength of 1380 nm, a spectral bandwidth of 6 nm, a coherence length of 101 $\mu$m (coherence time = 337 fs), and horizontal and vertical divergence half-angles of 11.8 degrees and 19.9 degrees, respectively. However, this is not to be construed in a limiting sense since it is envisioned that each optical emitter 10 of the array 8 may have one or more different performance characteristics.

The OE 2 is configured whereupon, in response to the combined input electromagnetic field 14, the OE 2 generates at an output plane 16 disposed a distance d2, e.g., 5 meters, from the second side 6 of the OE 2 an output electromagnetic field 18.

In accordance with the principles of the present disclosure, the OE 2 is configured whereupon in response to the combined input electromagnetic field 14, the output electromagnetic field 18 at the output plane 16 remains unchanged or substantially unchanged in intensity or intensity distribution between a first time when all of optical emitters 10 of the array 8 of optical emitters are emitting their individual electromagnetic fields 12 and a second time when a subset of one or more of the optical emitters 10 of the array 8 of optical emitters is not emitting their individual electromagnetic fields 12.

In an example, the output electromagnetic field remains substantially unchanged in intensity or intensity distribution at the output plane 16 when each of one or more portions or areas of the output electromagnetic field 18 at the output plane 16 has a reduced intensity, but is not extinguished, at the second time, when a subset of one or more of the optical emitters 10 of the array 8 of optical emitters is not emitting their individual electromagnetic fields 12, versus the first time, when all of optical emitters 10 of the array 8 of optical emitters are emitting their individual electromagnetic fields 12. In this example, the remaining portions or areas of the output electromagnetic field have the same intensity at both the first and second times.

In another example of what may comprise the output electromagnetic field remaining substantially unchanged in intensity or intensity distribution, the output electromagnetic field remains substantially unchanged in intensity or intensity distribution when N - M of the optical emitters stop emitting, whereupon a change in intensity or intensity distribution at the one or more portions or areas of the output electromagnetic field is about (N - M)/N%. For example, where N = 100 and M = 98, the change in intensity or intensity distribution is (100-98)/100 ~ 2%.

In summary, depending on the number of optical emitters 10 that may not be emitting their individual electromagnetic fields 12 at the second time, a localized intensity, intensity distribution, or brightness of the output electromagnetic field 18 at one or more locations at the output plane 16 may be different, but not extinguished, at the second time compared to the case where all of the optical emitters 10 are emitting their individual electromagnetic fields 12 at the first time. In other words, these one or more locations at the output plane 16 remain illuminated at the second time, albeit at a reduced intensity, versus the illumination of the same one or more locations at the output plane 16 at the first time.

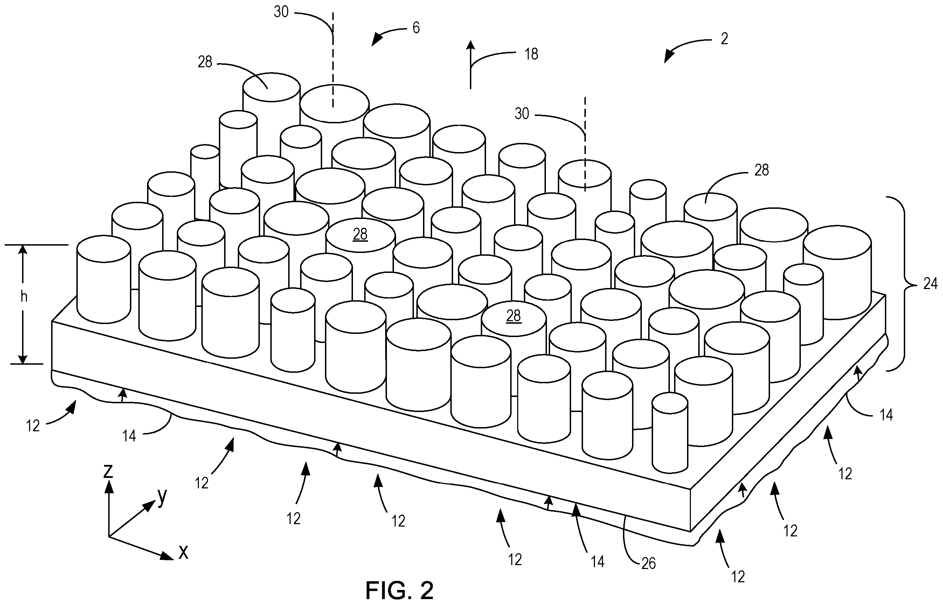

Having thus described the optical system of Fig. 1A and, in particular, the operation of the OE 2 which is configured to manipulate or shape the combined input electromagnetic field 14 as it passes through the body of OE 2, whereupon the output electromagnetic field 18 remains unchanged or substantially unchanged in intensity or intensity distribution at the output plane when up to 10%, 20%, or 30% of the optical emitters 10 of the array 8 of optical emitters are not outputting their individual electromagnetic fields 12 versus when all of the optical emitters 10 of the array 8 of optical emitters are outputting their individual electromagnetic fields 12, different non-limiting examples of the OE 2 will now described next with reference to Figs. 2-7, wherein each OE 2 is comprised of a single, unified body that may be formed in a manner well known in the art of semiconductor processing. Moreover, each OE 2 may be formed of any suitable and/or desirable optical material that enables the OE to operate in the manner disclosed herein. Non-limiting examples of such optical materials may include: glass or crystalline dielectric materials (e.g., SiO2, borosilicate glass, $Al_2O_3$, $CaF_2$, or $MgF_2$); a semiconductor material (e.g., Ge, Si, GaAs or InP); or a polymer (e.g., polymethyl methacrylate (PMMA) or polycarbonate). However, this list of optical materials is not to be construed in a limiting sense since it is envisioned that the OE 2 may be formed of any suitable and/or desirable optical material, now known or hereinafter developed, that enables the OE to operate in the manner disclosed in the present disclosure.

With reference to Fig. 2 and with continuing reference to all previous figures, an example OE 2 may include a single, unified body 24 which may include a first side 4 including a base 25 which may include a planar surface 26. In an example, the OE 2 may be oriented to receive the combined input electromagnetic field 14 input into the first side 4 of the OE 2 by the array 8 of optical emitters.

The second side 6 of the body 24 may include an array of projections or pillars 28, each of which may include a longitudinal axis 30 that may extend away from, e.g., perpendicular to, the planar surface 26. In an example, the combined input electromagnetic field 14 passes through and is modified or shaped by the diffractive nature of the OE 2 into the output electromagnetic field 18 at the output plane 16.

In this example, each projection or pillar 28 may have a cylindrical shape, a circular cross-section, and a planar surface opposite the planar surface 26. The array of projections or pillars 28 may include projections or pillars 28 that may be spaced from each other and may have projections or pillars 28 that have different diameters. In the OE 2 of Fig. 2, all of the projections or pillars may have the same height h from the planar surface 26.

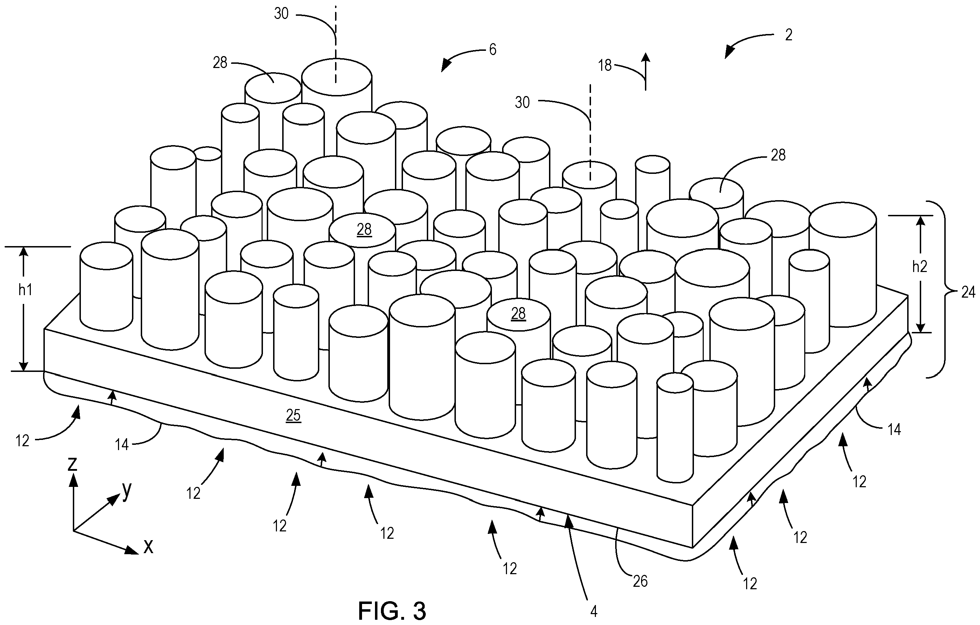

With reference to Fig. 3 and with continuing reference to all previous figures, the OE 2 shown in Fig. 3 is similar to the OE 2 shown in Fig. 2 with the following exception: in Fig. 3, the array of projections or pillars 28 may include projections or pillars 28 that may have any number of different heights, e.g., heights h1 and h2, from the planar surface 26.

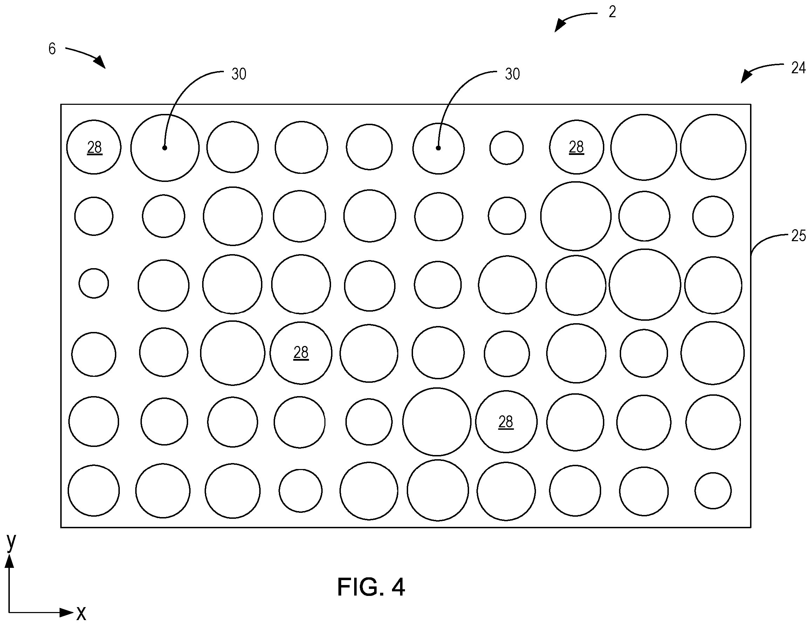

Fig. 4 is a plan view of the second side 6 of the OE 2 shown in Fig. 2 or Fig. 3.

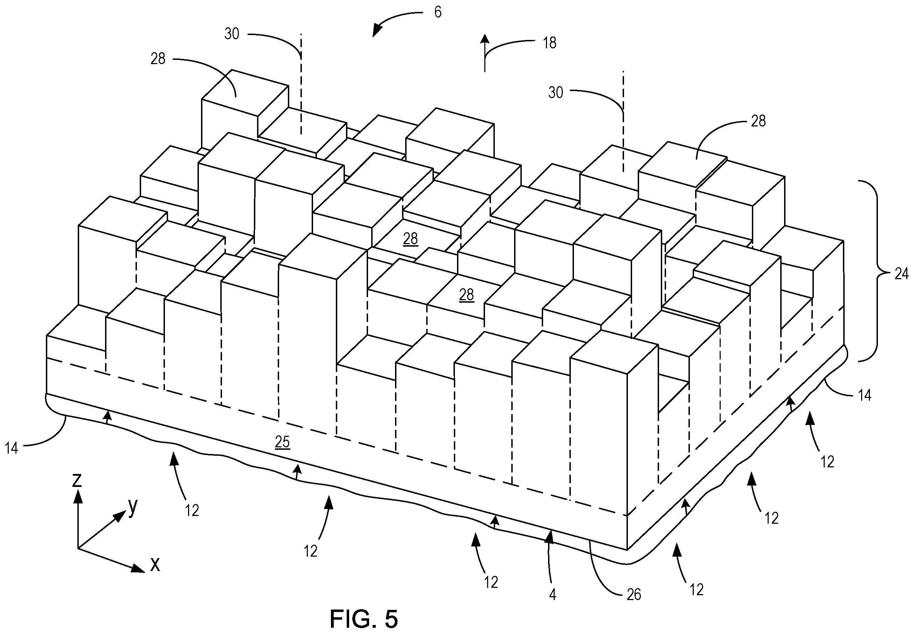

With reference to Fig. 5 and with continuing reference to all previous figures, another example OE 2 may include a single, unified body 24 which may include on the first side 4 of the body 24 a base 25 including a planar surface 26 for receiving the input electromagnetic fields 12 that combine to form the combined input electromagnetic field 14 input into the OE 2.

The second side 6 of the body 24 may include an array of projections or pillars 28, each of which may include a longitudinal axis 30 that may extend away from, e.g., perpendicular to, the planar surface 26. In an example, the combined input electromagnetic field 14 passes through and is modified or shaped by the diffractive nature of the OE 2 of Fig. 5 into the output electromagnetic field 18 at the output plane 16.

In this example, each projection or pillar 28 may have an elongated cube or cuboid shape, a square or rectangular cross-section, and a planar surface opposite the planar surface 26. Each elongated cube shaped projection or pillar 28 may extend from the base 25 that includes the planar surface 26 on one side of the base and the array of the projections or pillars 28 on another side of the base 25. In the example OE 2 shown in Fig. 5, the dashed lines, which indicate the extent of the elongated cube shaped projections or pillars 28 and the base 25, are shown only for reference purposes to aid in the description and understanding of the OE 2 shown in Fig. 5. To this end, it is to be appreciated that the OE 2 shown in Fig. 5, like the OE 2s shown in Figs. 2 and 3, is formed from a singular, unified body 24 that is etched to form the projections or pillars 28 on the second side 6 of the OE 2. Finally, the array of projections or pillars 28 of the OE 2 shown in Fig. 5 may include projections or pillars 28 that may have different heights from the planar surface 26.

The spaces, or lack thereof, between adjacent projections or pillars 28 and/or the same or different heights of the projections or pillars 28 in the various examples of OE 2 shown in Figs. 2-5 may encode phase change in the output electromagnetic field 18 at the output plane 16.

In an example, it is envisioned that the various features of the OE 2 shown in Figs. 2-5 may be combined, mixed, and/or, matched in any manner deemed suitable and/or desirable by one skilled in the art for a particular application. For example, each elongated cube shaped projection or pillar 28 of Fig. 5 may extend from the base 25 in spaced relation to each other, e.g., like the cylindrical projections or pillars 28 shown in Figs. 2 and 3 extend from the base 25 in spaced relation to each other.

In another example, the array of projections or pillars 28 of the OE 2 shown in Fig. 5 may include projections or pillars 28 that may have the same height from the planar surface 26, like the cylindrical projections or pillars 28 shown in Fig. 2.

In another example, the array of projections or pillars 28 of the OEs 2 shown in Figs. 2-5 may include one or more areas or regions that include projections or pillars 28 of the same height and one or more other areas or regions that include projections or pillars 28 of different heights.

In another example, the shapes of the projections or pillars 28 may be different. For example, a subset of the projections or pillars 28 may have a first shape, e.g., without limitation cylindrical with a circular cross-section, while another subset of the projections or pillars 28 may have a second shape, e.g., without limitation, a cube shaped with a square or rectangular projection.

Moreover, the shapes and/or cross-sections of the projections or pillars 28 described herein are not to be construed as limiting since it envisioned that one, some, or all of the projections or pillars 28 may have any shape and/or cross-section deemed suitable and/or desirable for a particular application, including projections or pillars 28 having different shapes and/or cross-sections.

Accordingly the disclosure herein of the various features of the OE 2s shown in Figs. 2-5 is not to be construed in a limiting sense.

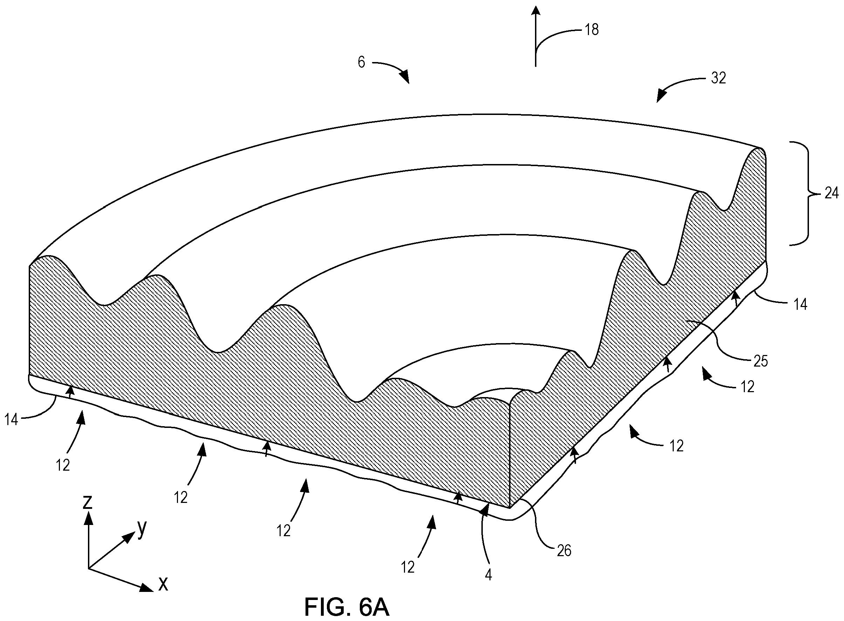

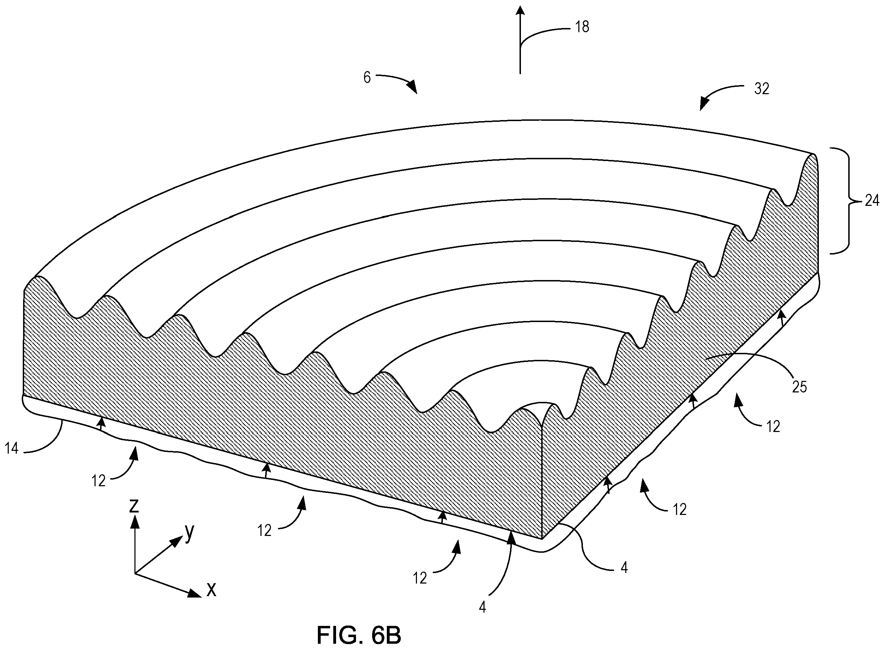

With reference to Figs. 6A and 6B, another example OE 2 may include a single, unified body 24 which may include on the first side 4 of the body 24 a base 25 including a planar surface 26 for receiving the input electromagnetic fields 12 that combine to form the combined input electromagnetic field 14 input into the OE 2. The second side 6 of the body 24 may include a continuously variable, undulating, or wavy surface 32. In an example, the combined input electromagnetic field 14 passes through and is modified or shaped by the diffractive nature of the OE 2 of Figs. 6A and 6B into the output electromagnetic field 18 at the output plane 16.

The portions of the OE 2 shown in Figs. 6A and 6B are isolated portions, e.g. minor segments, of a larger circular or disk shaped OE 2. However, this is not to be in a limiting sense since each OE 2 described in this disclosure may have any shape deemed suitable and/or desirable for a particular application such as, for example, rectangular, circular, or square.

The illustrations of the continuously variable, undulating, or wavy surfaces 32 in Figs. 6A and 6B, having the same heights in the Z direction in arcs centered radially around the lower right hand corner of the portions shown in Figs. 6A and 6B, are not to be construed in a limiting sense since these surfaces 32 may have any suitable and/ or desirable periodic and/or non-periodic forms of variable, undulating, or wavy surfaces 32 deemed suitable and/or desirable for an application. For example, the continuously variable, undulating, or wavy surfaces 32 may vary in height radially as shown in Figs. 6A and 6B, may vary in arcs centered radially around the lower right hand corner of the portions shown in Figs. 6A and 6B, or some combination thereof. Moreover, while the heights of the surfaces 32 in Figs. 6A and 6B are illustrated as varying continuously, it is envisioned that the heights of these surfaces 32 may vary discontinuously or some combination of continuously and discontinuously.

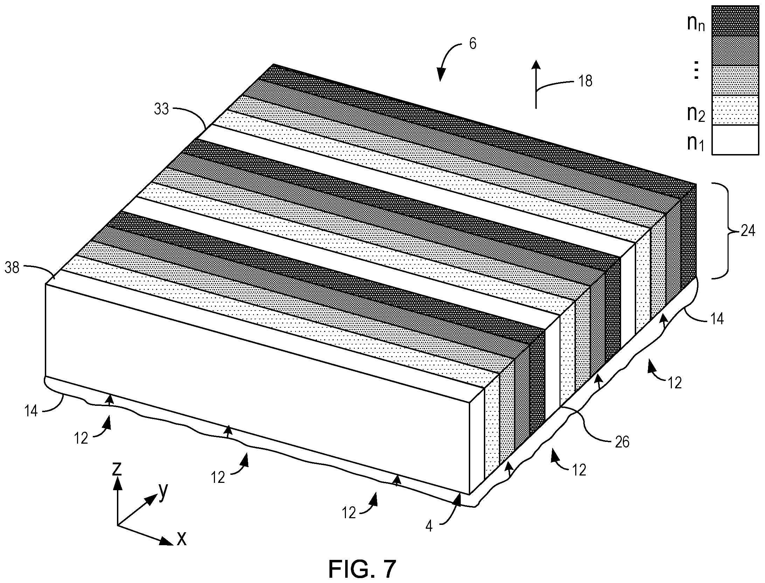

With reference to Fig. 7, another example OE 2 may include a body 24 including on the first side 4 of the body 24 a planar surface 26 for receiving the input electromagnetic fields 12 that combine to form the combined input electromagnetic field 14 input into the OE 2. The second side 6 of the body 24 may also include a planar surface 33. This example OE 2, however, includes sections having different refractive indices $n_1$- $n_n$. In an example, the combined input electromagnetic field 14 passes through and is modified or shaped by the diffractive nature of the different refractive indices $n_1$- $n_n$ of OE 2 shown in Fig. 7 into the output electromagnetic field 18 at the output plane 16.

In the orientation shown in Fig. 7, the example OE 2 includes strips 38 that extend in the X and Z directions of the same refractive index n while the Y direction includes strips 38 of different refractive indices $n_1$-$n_n$. The particular arrangement and number of strips 38 of different refractive indices $n_1$- $n_n$ is not to be construed in a limiting sense since it is envisioned that the strips 38 of the OE 2 of Fig. 7 may have any suitable and/or desirable arrangement of different refractive indices n.

Moreover, the example OE 2 shown in Fig. 7 including strips 38 is not construed in limiting sense since it is envisioned that the body 24 of the OE 2 may include an arrangement of refractive indices n that change in the X, Y, and Z directions, e.g., in a checkerboard pattern; a distorted checkerboard pattern where the grid or alignment is warped or irregular; an asymmetrical checkerboard pattern that lacks uniformity in size, spacing and/or arrangement; an irregular checkerboard pattern where the sections (e.g., squares) vary in shape, size, or arrangement; and/or a randomized checkerboard pattern where the sections (e.g., squares) are randomly positioned or altered. That is, the body 24 may include plural areas of different refractive indices and each area of different refractive index may extend between the first and second sides 4 and 6 of the body 24.

In an example, the combined input electromagnetic field 14 passes through and is modified or shaped by the diffractive nature of the OE 2 of Fig. 7 into the output electromagnetic field 18 at the output plane 16.

In this disclosure, the orientation of each OE 2 shown in Figs. 2-7 in the optical system of Fig. 1A is not to be construed in a limiting sense since it is envisioned that the orientation of each OE 2 shown in Figs. 2-7 may be reversed, whereupon the second side 6 of the body 24 may face the array 8 of optical emitters or the combined input electromagnetic field 14 and the first side 4 of the body 24 may face the output plane 16. Accordingly, in this disclosure, when used in connection with the body 24 and/or the OE 2, the terms "first side" and "second side" are not to be construed in a limiting sense.

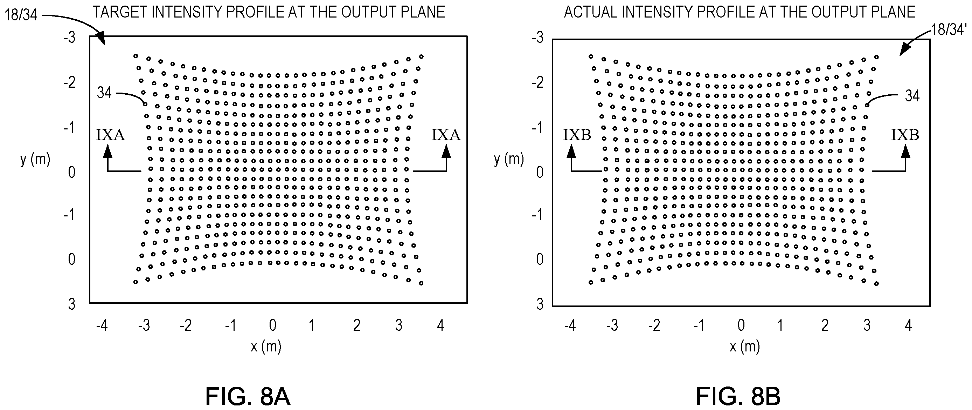

Having thus described a number of non-limiting example OEs 2, a non-limiting example of a method of designing an example OE 2 will be described next with reference to Figs. 8A-10B and with continuing reference to all previous figures.

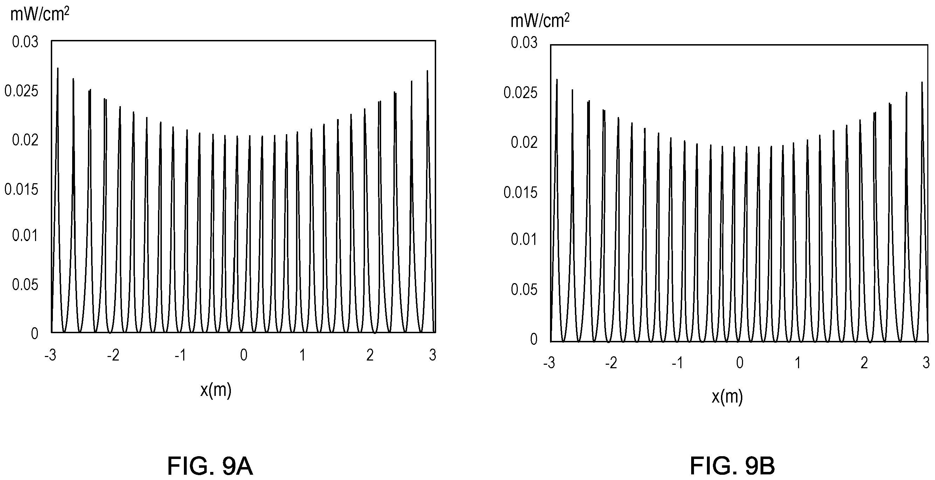

Fig. 8A illustrates an example desired (target) intensity pattern or profile 34 of the output electromagnetic field 18 at the output plane 16 which may be positioned the distance d2, e.g., 5 meters, from the OE 2. Fig. 8B illustrates an example actual intensity pattern or profile 34' of the output electromagnetic field 18 produced by the OE 2 made in accordance with the following disclosure at the output plane 16 which may be positioned the distance d2, e.g., 5 meters, from the OE 2. Figs. 9A-9B are example cross-sections of the example target and actual intensity profiles 34 and 34' taken along line IXA - IXA in Fig. 8A and line IXB - IXB in Fig. 8B, respectively.

In Fig. 8A, the (target) intensity pattern or profile 34 may be defined by a regular angular grid and angular intensity scaling of $cos^{-4}\theta$ over a field of illumination of 60° x 45°, where $\theta$ is a polar angle measuring deviation from an optical axis which intersects the plane of the first side 4 of the OE 2 normally. The angular spacing is set to provide approximately six hundred output spots 36 in the actual intensity pattern or profile 34' shown in Fig. 8B.

In an example, the array 8 of optical emitters 10 used to create the actual intensity pattern or profile of Fig. 8B is a 1 x 20 array of single-mode optical emitters 10 distributed horizontally with a spacing of 22 microns. In this example, each optical emitter 10 has a center wavelength of 1380 nm with a spectral bandwidth of 6 nm. The resulting coherence length is 101 $\mu$m (coherence time = 337 fs). Horizontal and vertical divergence half-angles are 11.8 degrees and 19.9 degrees, respectively, with the electromagnetic field polarization oriented along the array axis (i.e. the slow axis of each optical emitter 10).

In this example, the first side 4 of the OE 2 is located the distance d1, e.g., 0.56 mm, from the edges or top surfaces of the optical emitters 10. At this distance d1, the fields from individual optical emitters 10 overlap, at least partially, as shown by reference number 40 in Fig. 1A. The relationship between the array 8 of optical emitters 10, the OE 2, and the output plane 16 is shown schematically in Fig. 1A.

The design of the OE 2 proceeds in two major parts. In the first part "1" of the design process, the individual electromagnetic fields 12 emitted by the individual optical emitters 10, e.g. edge emitting lasers, are combined to form the combined input electromagnetic field 14 at or closely adjacent the first side 4 of the OE 2. The method to design the OE 2 (more specifically its phase transfer function) that yields the desired output electromagnetic field 18 produced at the output plane 16 when passed through the OE 2 from all of the optical emitters 10 is described in the following.

In the first part "1" of the design process, the combined input electromagnetic field 14 input into at first side 4 of the OE 2 derived from all of the individual electromagnetic fields 12 emitted by the individual optical emitters 10 is determined as follows:

Step 1A: The location where the first side 4 of the OE 2 will be located with respect to the optical emitters 10 is chosen. Without limiting the scope of the present disclosure, the first side 4 will be chosen at a distance d1 to the array 8 of optical emitters 10 where the individual electromagnetic fields 12 emitted by all or substantially all of the individual optical emitters 10 overlap substantially as shown by reference number 40 in Fig. 1A. As shown in Fig. 1A, individual electromagnetic fields 12 at the sides or edges of the first side 4 of the OE 2 may not overlap. Distance d1 may depend on any one or more of the following parameters: the numerical aperture or divergence angle of the individual optical emitters 10; the spacing between the individual optical emitters 10; and/or the lateral dimensions of the array 8 of optical emitters 10 (perpendicular to the optical axis). The location of the first side 4 of the OE 2 with respect to the array 8 of optical emitters 10 may be determined by one or more of the following methods: geometric optics; ray tracing; Gaussian beam propagation; or any other method known to those of ordinary skill in the art of optics.

Step 1B: At the first side 4 of the OE 2, a first combined input electromagnetic field 14 from the individual electromagnetic fields 12 emitted by all or substantially all of the individual optical emitters 10 is determined as follows: for each individual optical emitter 10, the complex electromagnetic field 12 of the individual optical emitter 10 at each spatial location on the surface of the first side 4 of the OE 2 is calculated after a phase shift, chosen randomly between 0 and $2\pi$ has been added. This random phase shift is added to account for the mutual spatial incoherence of the individual optical emitters 10. The complex electromagnetic fields 12 of all of the individual optical emitters 10 at each location of the first side 4 of the OE 2 are combined, e.g., added or summed, to form a first combined input electromagnetic field 14.

Step 1C: Next, after a time delay exceeding the coherence time, a second combined input electromagnetic field 14 is calculated, in the same manner as the first combined input electromagnetic field 14. The second combined input electromagnetic field 14 is modelled by creating a different set of random phase shifts, applying a different random phase shift to each of the individual electromagnetic fields 12 emitted by each individual optical emitter 10 to the first side 4 of the OE 2, and then combining, e.g., adding or summing, the individual electromagnetic fields 12 emitted by all of the individual optical emitters 10 to form the second combined input electromagnetic field 14 that is different from the first combined input electromagnetic field 14 due to the changed phase relationship between the individual electromagnetic fields 12.

Step 1D: Next, a first average joint electromagnetic field, both phase and amplitude, is determined by combining, e.g., adding or summing, the first and second combined input electromagnetic fields 14 at each location of the first side 4 of the OE 2. Before this combining occurs, however, the phases of the first and second combined input electromagnetic fields 14 are "unwrapped", so that each joint input wavefront is contiguous. In this disclosure, "unwrapping" is a process used to reconstruct the true phase of an individual electromagnetic field 12 from its wrapped phase. For example, the phase of an individual electromagnetic field 12 wave may be represented as an angle between $-\pi$ and $\pi$ radians, which may cause discontinuities when the phase exceeds these limits - appearing to "wrap around." For example, if the phase of an individual electromagnetic field 12 wave gradually increases, it might jump from $\pi$ to $-\pi$ when it crosses the $\pi$ boundary. This discontinuity is not physical but a result of the phase being confined to a limited range. "Unwrapping" corrects this by adding multiples of $2\pi$ to remove discontinuities, thus providing a continuous phase representation.

Step 1E: Next, a third combined input electromagnetic field 14 is calculated, in the same manner as the first and second combined input electromagnetic fields 14. Then, a second average joint electromagnetic field is determined by combining the first, second, and third combined input electromagnetic fields 14 at each location of the first side 4 of the OE 2.

Step 1F: The foregoing process is repeated N times, forming a new combined input electromagnetic field each time, and combining each new combined input electromagnetic field with all of the previously determined combined input electromagnetic fields, whereupon an Nth average joint electromagnetic field is generated in the manner described above. The Nth averaged joint electromagnetic field is determined by combining the N combined input electromagnetic fields, both phase and amplitude, and averaging at each location of the first side 4 of the OE 2.

Step 1G: After each iteration, the average joint electromagnetic fields for the Nth and (N-1)th iteration are compared. If the differences, in phase and amplitude, for the Nth and (N-1)th iteration exceed a predetermined, acceptance tolerance, the procedure continues. However, if the change is smaller than the predetermined, acceptance tolerance, the procedure is deemed complete and the thus determined averaged joint electromagnetic field of all sources may be used as the combined input electromatic field 14 for the design of the OE 2.

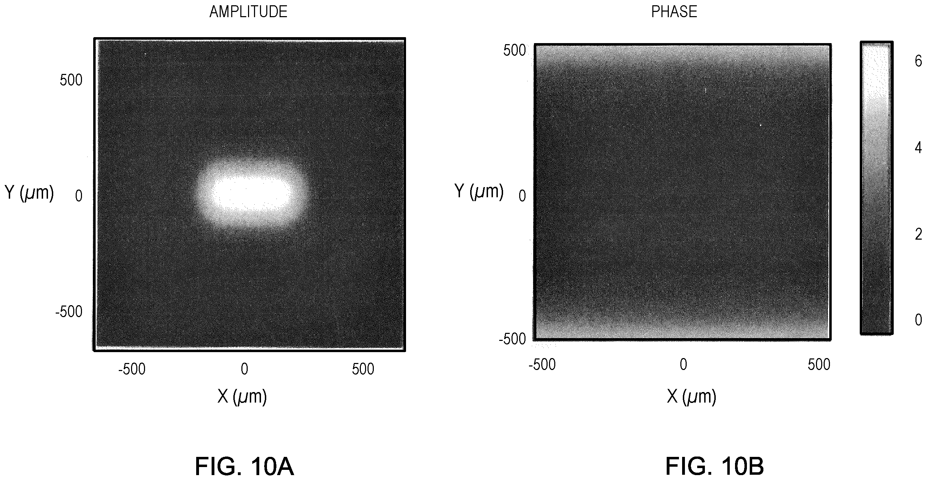

Figs. 10A-10B show examples of amplitudes and phases of the combined input electromatic field 14 used for the design of OE 2.

In the second part "2" of the design process, the combined input electromatic field 14, determined as described above for the first part "1" of the design process, is used for the design of OE 2, the amplitudes and phases of which are shown in Figs. 10A-10B, are then used to design a phase transfer function of the OE 2 that is required to generate the desired amplitude, intensity, or intensity distribution of the output electromagnetic field 18 at the output plane 16. The pattern of the amplitude, intensity, or intensity distribution of the output electromagnetic field 18 may be defined in angular space or at the output plane 16 positioned at the distance d2 from the OE 2. Algorithms well-known to those of ordinary skill in the art optics design, such as, for example, without limitation, the Gerchberg-Saxton iterative Fourier transform algorithm, may be used in the design of OE 2 (more specifically the phase transfer function of OE 2) and will be described next. However, it is envisioned that other suitable algorithms may be used in the design of OE 2. The second part "2" of detailed iterative design continues as follows:

> Step 2A: A desired target amplitude, intensity, or intensity distribution, e.g., of Fig. 8A, of the output electromagnetic field 18 at the output plane 16 ("Target") is established.
> Step 2B: An inverse Fourier transform of the Target is calculated to generate a complex field $F^{-1}$(Target) at the location of a plane at the second side 6 of the OE 2.
> Step 2C: An interim complex electromagnetic field ("Interim Source") is obtained by multiplying the amplitude of the combined input electromatic field 14 for the design of the OE 2 determined in Step 1G above ("Input") with an exponential of the phase of $F^{-1}$(Target).
> Step 2D: A Fourier transform of the "Interim Source" is computed F(Interim Source).
> Step 2E: A complex field ("Interim Output") is computed using the phase of F(Interim Source) and the amplitude of the target amplitude, intensity, or intensity distribution.
> Step 2F: An inverse Fourier transform of the "Interim Output" determined in Step 2E is computed to generate a complex field $F^{-1}$(Interim Output) at the location of a plane at the output side 6 of the OE 2. This is similar to Step 2B, except using the present Interim Output (determined in Step 2E) instead of the Target.
> Step 2G: An interim complex electromagnetic field ("Interim Source") is determined by multiplying the amplitude of the combined input electromatic field 14 for the design of the OE 2 determined in Step 1G above ("Input") with an exponential of the phase of $F^{-1}$(Interim Output) determined in Step 2F. This is similar to Step 2C, except using $F^{-1}$(Interim Output) instead of $F^{-1}$(Target).
> Step 2H: Steps 2D-2G are repeated until "Interim Output" matches "Target" within predetermined, desirable tolerances.
> Step 2I: Finally, the desired phase for the OE 2 is then the retrieved phase of the phase of the last iteration of Interim Source. From the desired phase for the OE 2, the sizes, shape, and heights of the projections or pillars 28 of the OE 2s shown in Figs. 2-5, the continuously varying thickness of the OE 2 shown in Fig. 6, and/or different refractive indices of the OE 2 having a constant height or thickness shown in Fig. 7 may be determined.

As can be seen in Fig. 8B, the actual intensity profile generated at the output plane 16 by the OE 2 is the same, or substantially the same, as the target intensity profile at the output plane 16 shown in Fig. 8A. Moreover, as can be seen, the cross-sections of the example target and actual intensity profiles shown in Figs. 9A-9B are the same or substantially the same.

The number of optical emitters 10 and the individual divergence characteristics for each mode used in this example are strictly for illustrative purposes and are not to be construed as limiting the present disclosure.

One set of differences to the example described above may include one or more of the following changes to the source properties:

> The number of optical emitters 10;
> The physical arrangement of optical emitters 10;
> The divergence properties of each individual optical emitter 10; and/or
> The wavelength of each individual optical emitters 10.

Another set of differences may include one or more of the following changes to the amplitude, intensity, or intensity distribution of the output electromagnetic field 18 generated at the output plane 16 by the OE 2:

> Number of the output spots 36;
> Arrangement of the output spots 36 including control of pincushion/barrel distortion;
> Different angular intensity profile; and/or
> Change of shape of the output spots (including, for example, correction of anamorphic distortion produced by tiling splitters) 36.

The above described design method and class of devices extends to diffusers and other outputs simply by creating a desired intensity profile at the output plane.

One advantage of the present disclosure is the ability to create an OE 2 at a working distance d1 where the individual input electromagnetic fields 12 overlap or substantially overlap (see 40 in Fig. 1A). This alleviates alignment and design constraints and tolerances and provides more output pattern design flexibility.

Another advantage compared to the prior art (e.g., the structured light generator approach where each VCSEL generates only a subset of dots in the form of tiles that are angularly stitched by use of a lens) is that each individual optical emitter 10 generates the same or substantially the same output pattern. The input electromagnetic fields 12 generated by all of the optical emitters 10 overlap substantially (as shown by 40 in Fig 1A) or are close to identical. This enables overlay of a global weighting pattern (e.g., the target intensity profile of Fig. 8A (such as inverse cosine $4^{th}$ power)) not possible with the non-overlapping prior art approach. The inventors discovered that turning off an individual optical emitter 10 will leave the output electromagnetic field 18 unchanged or substantially unchanged, whereas in the prior art structured light generator device an "output spot tile" corresponding to an emitter that was turned off would be missing in the overall output electromagnetic field. However, in accordance with the present disclosure it is envisioned that more than one optical emitter 10 may be turned off without affecting the output electromagnetic field 18, i.e., the output electromagnetic field 18 remains unchanged. Further, the structured light generator of the prior art has constraints on the working distance of the global focusing lens to provide seamless stitching for a specific source dimensions and splitter parameters. The optical system described in this disclosure allows for a greater arbitrary working distance d1 between the array 8 of optical emitters 10 and the first side 4 of the OE 2and reduced alignment sensitivity.

In one non-limiting example of the present disclosure, in which the input source is an array 8 of optical emitter 10 and the output is the target intensity pattern or profile 34 having a regular angular array of output spots 36, the working distance d1 between the array 8 of optical emitters 10 and the first side 4 of the OE 2 may be chosen in order to match the angular step size between optical emitters 10 to an angular step size of the output spots 36 in the target intensity pattern or profile 34 (Fig. 8A) at the output plane 16. In an example, the angular distance between proximate or adjacent optical emitters 10 may be

$$\theta = \tan^{-1}\frac{d}{z_1}$$

, where d is the center-to-center distance between adjacent optical emitters 10 and $z_1$ is the working distance between the surface of each optical emitter 10 and the planar surface at the first side 4 of the OE 2. The working distance $z_1$ is then defined such that $\theta$ equals the angular step between adjacent spots 36 in the output pattern.

Advantages of the optical system and OE 2 described herein include:

The OE 2 is designed to work with more than one optical emitter 10 (e.g., an array 8 of optical emitters 10);
The electromagnetic fields 12 emitted by the more than one optical emitter 10 overlap each other, at least partially, to form a combined input electromagnetic field 14 on the first side 4 of the OE 2;
The OE 2 generates the output electromagnetic field 18 from the electromagnetic fields 12 input into the OE 2 from the more than one optical emitter 10; and
The output electromagnetic field 18 generated by the OE 2 from the combined input electromagnetic field 14 remains unchanged or substantially unchanged when one or more of the optical emitters 10 are turned off.

Regarding the output electromagnetic field 18 generated by the OE 2 at the output plane 16 remaining unchanged or substantially unchanged when one or more of the optical emitters 10 are turned off, in use the OE 2 creates a desired intensity distribution at the output plane 16 or a desired angular output intensity distribution from the output electromagnetic field 18. The electromagnetic field 12 generated by each individual optical emitter 10 generates an angular or spatial output distribution that is closely related to the output distribution created by the output electromagnetic field 18. For example, the output intensity distribution of an individual optical emitter 10 may differ from that generated from the output electromagnetic field 18 as follows:

The individual optical emitter 10 output distribution (e.g. relative to peak intensity location or other spatial reference of the output electromagnetic field 18) may display a small angular or lateral displacement, e.g., 0.01°, 0.1°, 1.0°, 1 micron, 10 microns, 100 microns, from the output (intensity) distribution of the output electromagnetic field 18;
The output distribution of the individual optical emitter 10, which may be similar in overall shape except at a given locations, may deviate slightly from the output (intensity) distribution created from the output electromagnetic field 18;
In case of the pattern of spots 36, the individual optical emitter 10 may generate an output wherein a subset of the total number of rows or columns of spots 36 is produced;
The spots 36 of the individual optical emitter 10 output may be distorted, e.g., larger or smaller, and/or anamorphically compressed; and/or
If one or more individual optical emitter 10 ceases to contribute to the output electromagnetic field 18, the output distribution may be affected whereupon the intensity at a given location in the output electromagnetic field 18 at the output plane 16 may be reduced by approximately 1/N, where N is the number of emitters contributing to the combined field.

Other non-limiting examples or aspects of this disclosure are set forth in the following illustrative and exemplary numbered clauses:

Clause 1: An optical element (OE) for combining outputs of an array of optical emitters into a globally weighted intensity output comprises: a body formed whereupon, in response to N optical emitters emitting N electromagnetic fields toward the body that overlap each other, at least partially, to form an input electromagnetic field on a first side of the body, the body generates at an output plane disposed on a second side of the body an output electromagnetic field. The body is configured whereupon the output electromagnetic field remains unchanged or substantially unchanged in intensity at the output plane between a first time when the N optical emitters are emitting the N electromagnetic fields and a second time when M of the N optical emitters are emitting M electromagnetic fields, wherein M < N, N ≥ 3, and M ≥ 2. The output electromagnetic field remains substantially unchanged in intensity at the output plane when each of one or more portions or areas of the output electromagnetic field at the output plane has a reduced intensity, but is not extinguished, at the second time versus the first time and the remaining portions or areas of the output electromagnetic field have the same intensity at the first and second times.

Clause 2: The OE of clause 1, wherein the output electromagnetic field may remain substantially unchanged in intensity when N - M of the optical emitters stop emitting and a change in intensity at the one or more portions or areas of the output electromagnetic field is about (N - M)/N%.

Clause 3: The OE of clause 1 or 2, wherein the output electromagnetic field may remain substantially unchanged in intensity when an intensity distribution of the output electromagnetic field changes between 0.1% and 10% at the second time when the M of the N optical emitters is emitting versus the first time when the N optical emitters is emitting.

Clause 4: The OE of any one of clauses 1-3, wherein the body may comprise a single, unified body including at least one of: on the first side of the body, a planar or non-planar surface; and on the second side of the body, a planar or non-planar surface.

Clause 5: The OE of any one of clauses 1-4, wherein at least one non-planar surface may comprise: an array of projections, pillars, or extrusions; or a continuously and/or discontinuously varying, undulating, or wavy surface.

Clause 6: The OE of any one of clauses 1-5, wherein each projection, pillar, or extrusion may have a cylindrical shape and/or a circular cross-section.

Clause 7: The OE of any one of clauses 1-6, wherein the projections, pillars, or extrusions may be spaced from each other.

Clause 8: The OE of any one of clauses 1-7, wherein the array of projections, pillars, or extrusions may include projections, pillars, or extrusions that have different diameters.

Clause 9: The OE of any one of clauses 1-8, wherein the projections, pillars, or extrusions may all have the same height.

Clause 10: The OE of any one of clauses 1-9, wherein the projections, pillars, or extrusions may have different heights.

Clause 11: The OE of any one of clauses 1-10, wherein each projection, pillar, or extrusion may have a square or rectangular cross-section.

Clause 12: The OE of any one of clauses 1-11, wherein the array of projections, pillars, or extrusions may include projections, pillars, or extrusions that have different heights.

Clause 13: The OE of any one of clauses 1-12, wherein the array of projections, pillars, or extrusions may be formed by etching a block of OE material.

Clause 14: The OE of any one of clauses 1-13, wherein: the body may include plural areas of different refractive indices; and each area of different refractive index may extend between the first and second sides of the body.

Clause 15: The OE of any one of clauses 1-14, wherein the body may include a planar first side and a planar second side.

Clause 16. An optical system comprising; an optical element (OE) having a first side and a second side; and an array of optical emitters disposed and operative for emitting to the first side of the OE input electromagnetic fields that overlap each other, at least partially, to form a combined input electromagnetic field at the first side of the OE, whereupon in response to the combined input electromagnetic field, the OE generates at an output plane disposed on the second side of the OE an output electromagnetic field, wherein the output electromagnetic field remains unchanged or substantially unchanged in intensity or intensity distribution at the output plane between a first time when all of optical emitters of the array of optical emitters are emitting the input electromagnetic fields and a second time when a subset of one or more of the optical emitters of the array of optical emitters is not emitting the input electromagnetic fields, and the output electromagnetic field remains substantially unchanged in intensity when one or more portions or areas of the output electromagnetic field remain illuminated at reduced intensity at the second time versus the first time.

Clause 17: The optical system of clause 16, wherein: the first side of the OE and the array of optical emitters are positioned a distance d1 from each other; the second side of the OE and the output plane are positioned a distance d2 from each other; and d1 < d2.

Clause 18: The optical system of clause 16 or clause 17, wherein: the first side of the OE includes a planar or non-planar surface; and the second side of the OE includes a planar or non-planar surface.

Clause 19: The optical system of any of clauses 16 to 18, wherein each non-planar surface comprises: a plurality of projections, pillars, or extrusions of the same height or different heights; or a continuously and/or discontinuously varying, undulating, or wavy surface.

Clause 20: The optical system of any of clauses 16 to 19, wherein the OE includes plural areas of different refractive indices.

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

**Claims**

1. An optical element (OE) for combining outputs of an array of optical emitters into a globally weighted intensity output, the OE comprising:

a body formed whereupon, in response to N optical emitters emitting N electromagnetic fields toward the body that overlap each other, at least partially, to form an input electromagnetic field on a first side of the body, the body generates at an output plane disposed on a second side of the body an output electromagnetic field;
wherein the body is configured whereupon the output electromagnetic field remains unchanged or substantially unchanged in intensity at the output plane between a first time when the N optical emitters are emitting the N electromagnetic fields and a second time when M of the N optical emitters are emitting M electromagnetic fields, wherein M < N, N ≥ 3, and M ≥ 2; and
wherein the output electromagnetic field remains substantially unchanged in intensity at the output plane when each of one or more portions or areas of the output electromagnetic field at the output plane has a reduced intensity, but is not extinguished, at the second time versus the first time and the remaining portions or areas of the output electromagnetic field have the same intensity at the first and second times.

2. The OE of claim 1, wherein the output electromagnetic field remains substantially unchanged in intensity when N - M of the optical emitters stop emitting and a change in intensity at the one or more portions or areas of the output electromagnetic field is about (N - M)/N%.

3. The OE of claim 1 or claim 2, wherein the output electromagnetic field remains substantially unchanged in intensity when an intensity distribution of the output electromagnetic field changes between 0.1% and 10% at the second time when the M of the N optical emitters is emitting versus the first time when the N optical emitters is emitting.

4. The OE of any preceding claim, wherein the body comprises a single, unified body including at least one of:

on the first side of the body, a planar or non-planar surface; and
on the second side of the body, a planar or non-planar surface.

5. The OE of claim 4, wherein one or both of the non-planar surfaces comprises:

an array of projections, pillars, or extrusions; or
a continuously and/or discontinuously varying, undulating, or wavy surface.

6. The OE of claim 5, wherein each projection, pillar, or extrusion has a cylindrical shape and/or a circular cross-section;

optionally wherein the projections, pillars, or extrusions are spaced from each other; further optionally, wherein the array of projections, pillars, or extrusions include projections, pillars, or extrusions that have different diameters;
and further optionally, wherein the projections, pillars, or extrusions all have the same height or wherein the projections, pillars, or extrusions have different heights.

7. The OE of claim 5 or claim 6, wherein each projection, pillar, or extrusion has a square or rectangular cross-section.

8. The OE of claim 7, wherein the array of projections, pillars, or extrusions include projections, pillars, or extrusions that have different heights.

9. The OE of any of claims 5 to 8, wherein the array of projections, pillars, or extrusions is formed by etching a block of OE material.

10. The OE of any preceding claim, wherein:

the body includes plural areas of different refractive indices; and
each area of different refractive index extends between the first and second sides of the body and optionally, wherein the body includes a planar first side and a planar second side.

11. An optical system comprising:

an optical element (OE) having a first side and a second side; and
an array of optical emitters disposed and operative for emitting to the first side of the OE input electromagnetic fields that overlap each other, at least partially, to form a combined input electromagnetic field at the first side of the OE, whereupon in response to the combined input electromagnetic field, the OE generates at an output plane disposed on the second side of the OE an output electromagnetic field, wherein:

the output electromagnetic field remains unchanged or substantially unchanged in intensity or intensity distribution at the output plane between a first time when all of optical emitters of the array of optical emitters are emitting the input electromagnetic fields and a second time when a subset of one or more of the optical emitters of the array of optical emitters is not emitting the input electromagnetic fields, and

the output electromagnetic field remains substantially unchanged in intensity when one or more portions or areas of the output electromagnetic field remain illuminated at reduced intensity at the second time versus the first time.

12. The optical system of claim 11, wherein:

the first side of the OE and the array of optical emitters are positioned a distance d1 from each other;

the second side of the OE and the output plane are positioned a distance d2 from each other; and

$$d1 < d2.$$

13. The optical system of claim 11 or 12, wherein:

the first side of the OE includes a planar or non-planar surface; and

the second side of the OE includes a planar or non-planar surface.

14. The optical system of claim 13, wherein each non-planar surface comprises:

a plurality of projections, pillars, or extrusions of the same height or different heights, wherein adjacent projections, pillars, or extrusions are adjoining or spaced from each other; or

a continuously and/or discontinuously varying, undulating, or wavy surface.

15. The optical system of any of claims 11 to 14, wherein the OE includes plural areas of different refractive indices.

**Amended claims in accordance with Rule 137(2) EPC.**

1. An optical element (OE) (2) for combining outputs of an array (8) of optical emitters (10) into a globally weighted intensity output, the OE comprising:

a body (24) formed whereupon, in response to N optical emitters (10) emitting N electromagnetic fields (12) toward the body (24) that overlap each other, at least partially, to form an input electromagnetic field (14) on a first side (4) of the body (24), the body (24) generates at an output plane (16) disposed on a second side (6) of the body (24) an output electromagnetic field (18);

wherein the body (24) is configured whereupon the output electromagnetic field (18) remains unchanged or substantially unchanged in intensity at the output plane (16) between a first time when the N optical emitters (10) are emitting the N electromagnetic fields and a second time when M of the N optical emitters (10) are emitting M electromagnetic fields, wherein M < N, N ≥ 3, and M ≥ 2;

wherein the output electromagnetic field (18) remains substantially unchanged in intensity at the output plane (16) when each of one or more portions or areas of the output electromagnetic field (18) at the output plane (16) has a reduced intensity, but is not extinguished, at the second time versus the first time and the remaining portions or areas of the output electromagnetic field (18) have the same intensity at the first and second times,

wherein the body (24) comprises a non-planar surface on at least one side (4 or 6) of the body (24) or planar surfaces (26 and 33) on opposite sides of the body (24); and

wherein the non-planar surface comprises:

an array of projections, pillars, or extrusions (28) spaced from each other by spaces; or

an array of projections, pillars, or extrusions (28) of different heights adjoining each other; or

a continuously and/or discontinuously varying, undulating, or wavy surface; or

wherein the body (24) comprising the planar surfaces (26 and 33) on the opposite sides of the body (24) comprises plural areas of different refractive indices that extend between the opposite sides of the body (24).

2. The OE of claim 1, wherein the output electromagnetic field (18) remains substantially unchanged in intensity when N - M of the optical emitters (10) stop emitting and a change in intensity at the one or more portions or areas of the output electromagnetic field (18) is about (N - M)/N%.

3. The OE of claim 1 or claim 2, wherein the output electromagnetic field (18) remains substantially unchanged in intensity when an intensity distribution of the output electromagnetic field (18) changes between 0.1% and 10% at the second time when the M of the N optical emitters (10) is emitting versus the first time when the N optical emitters (10) is emitting.

4. The OE of claim 1, wherein each projection, pillar, or extrusion (28) has a cylindrical shape and/or a circular cross-section;

optionally, wherein the array of projections, pillars, or extrusions (28) include projections, pillars, or extrusions that have different diameters; and further optionally, wherein the projections, pillars, or extrusions (28) all have the same height (h) or wherein the projections, pillars, or extrusions have different heights (h1 and h2).

5. The OE of claim 1, wherein each projection, pillar, or extrusion (28) has a square or rectangular cross-section.

6. The OE of claim 5, wherein the array of projections, pillars, or extrusions (28) include projections, pillars, or extrusions that have different heights (h1 and h2).

7. The OE of any of claims 4 to 6, wherein the array of projections, pillars, or extrusions (28) is formed by etching a block of OE material.

8. An optical system comprising:

an optical element (OE) (2) including a body (24) having a first side (4) and a second side (6); and an array (8) of optical emitters (10) disposed and operative for emitting to the first side (4) of the OE (2) input electromagnetic fields (12) that overlap each other, at least partially, to form a combined input electromagnetic field (14) at the first side (4) of the OE (2), whereupon in response to the combined input electromagnetic field (14), the OE (2) generates at an output plane (16) disposed on the second side (6) of the OE (2) an output electromagnetic field (18), wherein:

the output electromagnetic field (18) remains unchanged or substantially unchanged in intensity or intensity distribution at the output plane (16) between a first time when all of optical emitters (10) of the array (8) of optical emitters (10) are emitting the input electromagnetic fields (12) and a second time when a subset of one or more of the optical emitters (10) of the array (8) of optical emitters (10) is not emitting the input electromagnetic fields (12), the output electromagnetic field (18) remains substantially unchanged in intensity when one or more portions or areas of the output electromagnetic field (18) remain illuminated at reduced intensity at the second time versus the first time, the body (24) comprises a non-planar surface on at least one side (4 or 6) of the body (24) or planar surfaces (26 and 33) on opposite sides of the body (24); and wherein the non-planar surface comprises:

a plurality of projections, pillars, or extrusions (28) of the same height (h) or different heights (h1 and h2), wherein adjacent projections, pillars, or extrusions adjoin each other or are spaced from each other by spaces; or a continuously and/or discontinuously varying, undulating, or wavy surface; or

wherein the body (24) comprising the planar surfaces (26 and 33) on the opposite sides of the body (24) comprises plural areas of different refractive indices that extend between the opposite sides of the body (24).

9. The optical system of claim 8, wherein:

the first side (4) of the OE (2) and the array (8) of optical emitters (10) are positioned a distance d1 from each other; the second side (6) of the OE (2) and the output plane (16) are positioned a distance d2 from each other; and d1 < d2.

10. The OE of claim 7, wherein the OE material comprises:

a glass or crystalline dielectric material; a semiconductor material; or a polymer.

11. The optical system of claim 8, wherein the body (24) is formed of:

a glass or crystalline dielectric material; a semiconductor material; or a polymer.

12. The OE of claim 1, wherein the plural areas of different refractive indices that extend between the opposite sides of the body (24) comprise:

strips (38) that extend in X and Z directions of the body (24) that have the same refractive index (n) and in a Y direction of the body (24) the strips (38) have different refractive indices ($n_1$-$n_n$); or

an arrangement of refractive indices that change in the X, Y, and Z directions of the body (24).

13. The OE of claim 8, wherein the plural areas of different refractive indices that extend between the opposite sides of the body (24) comprise:

strips (38) that extend in X and Z directions of the body (24) that have the same refractive index (n) and in a Y direction of the body (24) the strips (38) include different refractive indices ($n_1$-$n_n$); or
an arrangement of refractive indices that change in the X, Y, and Z directions of the body (24).

FIG. 1A

FIG. 1B

FIG. 1C

FIG. 2

FIG. 3

EP 4 686 962 A1

FIG. 4

FIG. 5

FIG. 6A

EP 4 686 962 A1

FIG. 6B

FIG. 7

FIG. 8A

FIG. 8B

EP 4 686 962 A1

mW/cm²

FIG. 9A

mW/cm²

FIG. 9B

AMPLITUDE

**FIG. 10A**

PHASE

**FIG. 10B**

EP 4 686 962 A1

| | Europäisches Patentamt European Patent Office Office européen des brevets | **EUROPEAN SEARCH REPORT** | **Application Number** EP 25 15 4018 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/094437 A1 (REMEZ ROEI [IL] ET AL) 21 March 2024 (2024-03-21) * claim 9; figure 5B * * paragraphs [0038], [0045] * ----- | 1-15 | INV. G02B1/00 G02B27/10 G02B27/09 G02B27/42 |
| X | US 2024/125987 A1 (BEHOUNEK TOMAS [CZ]) 18 April 2024 (2024-04-18) * claims 1, 8; figures 16A-16B * ----- | 1,5 | |
| A | CN 116 560 046 A (UNIV SOUTH CHINA NORMAL) 8 August 2023 (2023-08-08) * figure 3 * ----- | 1-15 | |
| A | US 2020/072668 A1 (HAN SEUNGHOON [KR] ET AL) 5 March 2020 (2020-03-05) * figure 23 * ----- | 1-15 | |
| A | CN 111 913 304 A (JIAXING YUGUANG PHOTOELECTRIC TECH CO LTD; HUAWEI DEVICE CO LTD) 10 November 2020 (2020-11-10) * claims 1, 5 * ----- | 1-15 | TECHNICAL FIELDS SEARCHED (IPC) G02B |

The present search report has been drawn up for all claims

| Place of search | Date of completion of the search | Examiner |
|---|---|---|
| Munich | 6 July 2025 | Le Masson, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4018

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2025

| Patent document cited in search report | Publication date | Patent family member(s) | | Publication date |
|---|---|---|---|---|
| US 2024094437 A1 | 21-03-2024 | NONE | | |
| US 2024125987 A1 | 18-04-2024 | EP | 3123214 A1 | 01-02-2017 |
| | | GB | 2524549 A | 30-09-2015 |
| | | US | 2018136377 A1 | 17-05-2018 |
| | | US | 2024125987 A1 | 18-04-2024 |
| | | WO | 2015144823 A1 | 01-10-2015 |
| CN 116560046 A | 08-08-2023 | NONE | | |
| US 2020072668 A1 | 05-03-2020 | NONE | | |
| CN 111913304 A | 10-11-2020 | NONE | | |

EPO FORM P0459

For more details about this annex : see Official Journal of the European Patent Office, No. 12/82

**REFERENCES CITED IN THE DESCRIPTION**

**Patent documents cited in the description**

- US 63677100